# EUROPEAN PATENT APPLICATION

(11) **EP 3 415 971 A1**
(43) Date of publication of application: **19.12.2018**
(21) Application number: 17750133.5
(22) Date of filing: 31.01.2017
(51) Int. Cl.: G02B 27/01, B60K 35/00, G02B 26/10, G02B 27/22, G09G 5/10

(54) **INFORMATION DISPLAY DEVICE**

(30) Priority: 10.02.2016 JP 2016024051
(71) Applicant: Ricoh Company, Ltd., Tokyo 143-8555 (JP)
(72) Inventor: SUZUKI, Yuuki, Tokyo 143-8555 (JP); SAISHO, Kenichiroh, Tokyo 143-8555 (JP); KUSANAGI, Masato, Tokyo 143-8555 (JP); YAMAGUCHI, Hiroshi, Tokyo 143-8555 (JP); KATAGIRI, Keita, Tokyo 143-8555 (JP)
(74) Representative: J A Kemp
(86) International application number: PCT/JP2017/003448
(87) International publication number: WO 2017/138409

(57) **Abstract**

An information display apparatus projects one or more images onto a transmissive reflection member. The information display apparatus is configured to adjust luminance of the one or more images to be displayed, such that, in a display region capable of displaying the one or more images, L_B/L_P that is a value obtained by luminance L_P of a region other than the one or more images to be displayed and background luminance L_B behind the region other than the one or more images becomes greater than or equal to a predetermined value.

## Description

### [Technical Field]

The disclosures herein generally relate to an information display apparatus.

### [Background Art]

In recent years, as an information display apparatus that allows a viewer to identify information and warnings with less movement of the line of sight, an apparatus that makes a virtual image visible in front of the viewer has been actively developed.

In such an information display apparatus, a virtual image is superimposed on a front scene viewed from the viewer. Therefore, by adjusting a geometric shape of display information, which is the virtual image, so as to match real space, the display information can be perceived as existing in the real space when viewed from the viewer.

For example, as such an information display apparatus, a navigation system is disclosed. In the navigation system, an image (such as figures, characters, and symbols) is displayed so as to be superimposed on a front scene and the display of the image is varied over time in accordance with the movement of a moving object (see Patent Document 1, for example). In this information display apparatus, by changing the size of the displayed image in accordance with a distance to an intersection, the displayed image is assumed to be perceived as existing at a position corresponding to the intersection.

### [Summary of the Invention]

### [Problem to be Solved by the Invention]

However, in the above-described technique, there is no description about a configuration of a device that projects a virtual image or about a light source. For example, when a panel method that uses an imaging device such as a liquid crystal panel to form an intermediate image is employed, because in the panel method an image is formed by emitting light to a panel while partially blocking the light, there may be a case where a region in which an image is not rendered (a non-rendering region) may appear slightly bright.

In this case, even if displayed information is adjusted so as to three-dimensionally match real space, the non-rendering region appearing slightly bright is perceived as a plane display, making it difficult for a viewer to perceive the displayed information as existing at a position in the real space.

In view of the above, it is a general object of the present invention to provide an information display apparatus that allows a viewer to perceive information as existing at a position in real space.

### [Means to Solve the Problem]

According to at least one embodiment, an information display apparatus projects one or more images onto a transmissive reflection member. The information display apparatus is configured to adjust luminance of the one or more images to be displayed, such that, in a display region capable of displaying the one or more images, L_B/L_P that is a value obtained by luminance L P of a region other than the one or more images to be displayed and background luminance L_B behind the region other than the one or more images becomes greater than or equal to a predetermined value.

### [Effects of the Invention]

According to at least one embodiment, it is possible to provide an information display apparatus that allows a viewer to perceive information as existing at a position in real space.

### [Brief Description of the Drawings]

FIG. 1 is a schematic diagram illustrating an information display apparatus according to a first embodiment;
FIG. 2 is a diagram illustrating a configuration of an optical unit of the information display apparatus according to the first embodiment;
FIG. 3 is a block diagram illustrating a hardware configuration of the information display apparatus according to the first embodiment;
FIG. 4 is a block diagram illustrating functions of the information display apparatus according to the first embodiment;
FIG. 5 is a diagram for explaining a parallax angle;
FIG. 6 is a diagram for explaining luminance L_P and background luminance L_B;
FIG. 7 is a diagram for explaining a method for obtaining luminance L_P and background luminance L_B;
FIG. 8 is a diagram for explaining a relationship between an area ratio of an illuminated portion and contrast L_B/L_P;
FIG. 9 is a diagram for explaining a comparative example; and
FIG. 10 is a diagram for explaining an example.

### [Mode for Carrying out the Invention]

In the following, embodiments of the present invention will be described with reference to the accompanying drawings. In the drawings, the same elements are denoted by the same reference numerals and a duplicate description thereof may be omitted.

### <First Embodiment>

### [Overview of Information Display Apparatus]

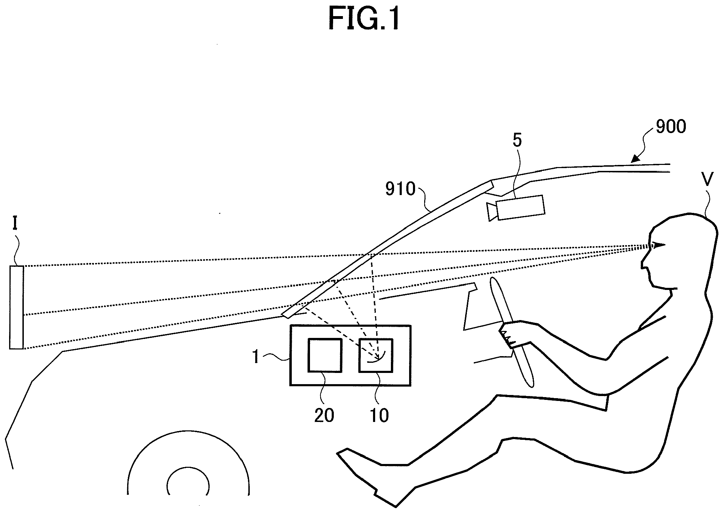

FIG. 1 is a schematic diagram illustrating an information display apparatus according to a first embodiment. Referring to FIG. 1, an information display apparatus 1 is installed in a reference vehicle 900. The information display apparatus 1 is what is known as a head-up display (hereinafter referred to as a HUD) having functions for projecting a predetermined image onto a front windshield 910 in front of a viewer V and superimposing and displaying the predetermined image as a virtual image I in the visual field of the viewer V. Herein, the viewer V is a driver who is an occupant of the reference vehicle 900. The front windshield 910 also functions as a transmissive reflection member that transmits part of incident light and reflects at least part of the rest of the incident light.

The information display apparatus 1 may be disposed at any position according to interior design of the reference vehicle 900. For example, the information display apparatus 1 may be disposed on a dashboard of the reference vehicle 900, or may be embedded in the dashboard of the reference vehicle 900. The information display apparatus 1 includes an optical unit 10 and an electronic unit 20 as main elements.

In the present embodiment, although an example in which the information display apparatus 1 is installed in the reference vehicle 900 is illustrated, the present invention is not limited to this example. For example, the information display apparatus 1 may be installed in a moving object such as a vehicle, an aircraft, a ship, and an industrial robot, and makes navigation information required for the steering of the moving object visible on a front windshield of the moving object. As used herein, the navigation information is information such as a speed of the moving object, a travelling direction, a distance to a destination, a name of a current location, a presence or a position of an object (a real object) in front of the moving object, signs such as speed limits, and traffic congestion information, for example.

As a projection method of the information display apparatus 1, a panel method and a laser scanning method may be employed. The panel method is a method for forming an intermediate image by using an imaging device such as a liquid crystal panel, a digital mirror device (DMD) panel, and a vacuum fluorescent display (VFD). The laser scanning method is a method for forming an intermediate image by scanning a laser beam emitted from a laser beam source by using a two-dimensional scanning device.

Unlike the panel method that forms an image by emitting light to a panel while partially blocking the light emitted to the panel, the laser scanning method forms an image by assigning light emission and non-light emission for each pixel, allowing a high-contrast image to be formed. Thus, the laser scanning method is preferable. In the present embodiment, the information display apparatus 1 employs the laser scanning method as a projection method, but the present invention is not limited thereto.

In FIG. 1, an information acquisition unit 5 may obtain background luminance of a region in which the virtual image I is displayed, and send the background luminance to the information display apparatus 1. However, the information acquisition unit is not an element of the information display apparatus 1.

The information acquisition unit 5 is disposed in such a manner that captures an angle of view of a scene in front of the reference vehicle 900, including a scene overlapped with the virtual image I when viewed from the viewer V. The information acquisition unit 5 may be disposed at any position according to interior design of the reference vehicle 900. For example, the information acquisition unit 5 may be disposed on a ceiling of the reference vehicle 900. Alternatively, the information acquisition unit 5 may be disposed on the dashboard of the reference vehicle 900.

The information acquisition unit 5 is, for example, a monocular camera, a compound-eye camera (stereo camera), or an omnidirectional camera generating a synthetic image from a plurality of camera images. In addition to obtaining the background luminance, the information acquisition unit 5 may also function as a drive recorder or a sensing device. Example applications of the sensing device include detecting preceding vehicles, people, and signs, and also detecting distances to obstacles.

In other words, the information acquisition unit 5 is not necessarily provided for exclusive use of the information display apparatus 1. For example, an information acquisition unit used for a drive recorder may be utilized. Note that providing the information acquisition unit 5 for exclusive use of the information display apparatus 1 is not negated. Further, the information acquisition unit 5 may use an ambient light sensor or a sunlight sensor such as a phototransistor and a photodiode designed specifically to measure background luminance.

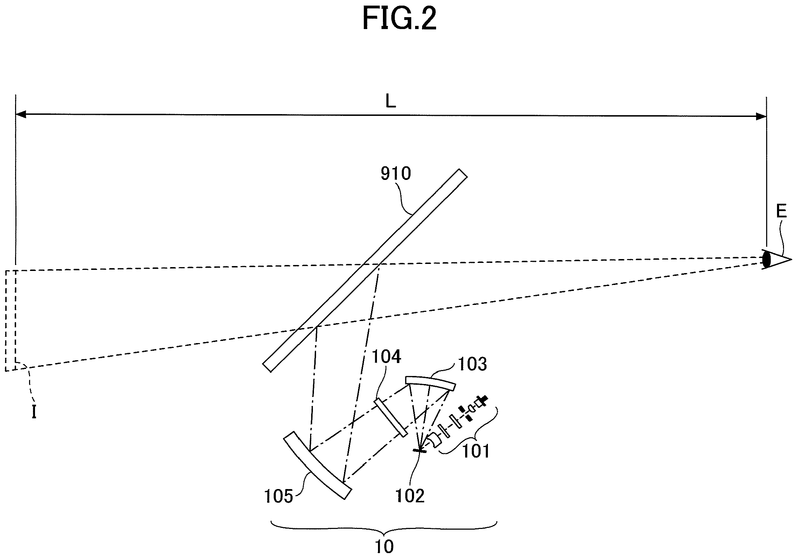

FIG. 2 is a diagram illustrating a configuration of the optical unit of the information display apparatus according to the first embodiment. Referring to FIG. 2, the optical unit 10 generally includes a light source unit 101, an optical deflector 102, a mirror 103, a screen 104, and a concave mirror 105.

By emitting light for forming an image (image light) from the optical unit 10 toward the front windshield 910, a virtual image I of the image can be made visible from a viewpoint position E (a middle point between the right and left eyes) of the viewer V. Namely, the viewer V can visually identify an image (an intermediate image) formed on the screen 104 as a virtual image I through the front windshield 910. This intermediate image is an information provision image for providing information to the viewer V.

A configuration example of the optical unit 10 will be described below. The light source unit 101 includes three red, green, and blue laser beam sources (hereinafter referred to as LDs), a coupling lens, an aperture, a synthesizing element and a lens, for example. Laser beams emitted from the three LDs are synthesized, and the synthesized laser beam is directed toward a reflective surface of the optical deflector 102. The synthesized laser beam directed toward the reflective surface of the optical deflector 102 is two-dimensionally scanned by the optical deflector 102.

As the optical deflector 102, a single micro-mirror that oscillates around two axes orthogonal to each other and two micro-mirrors that oscillate or rotate around a single axis may be used, for example. The optical deflector 102 may be a microelectromechanical systems (MEMS) device manufactured by a semiconductor process, for example. The optical deflector 102 may be driven by an actuator that uses deformation of piezoelectric elements as a driving force. As the optical deflector 102, a galvanometer mirror and a polygon mirror may be used, for example.

The laser beam two-dimensionally scanned by the optical deflector 102 is directed toward the front windshield 910 via an optical system. To be more specific, the laser beam two-dimensionally deflected by the optical deflector 1022 enters the mirror 103 and is reflected by the mirror 103. Accordingly, a two-dimensional image (an intermediate image) is projected onto a surface (a scan surface) of the screen 104. As the mirror 103, a concave mirror may be used, for example. A convex mirror or a plane mirror may also be used. As the screen 104, it is preferable to use a microlens array or a micro-mirror array having a function for diverging a laser beam at a desired angle of divergence. A diffusing plate for diffusing a laser beam, or a transmission plate or a reflection plate having a smooth surface may also be used.

The laser beam emitted from the screen 104 is reflected by the concave mirror 105 and enters the front windshield 910. Part of light flux incident on the windshield 910 is transmitted through the windshield 910 and at least part of the rest of the light flux is reflected toward the viewpoint position E. As a result, the viewer V can visually identify an enlarged virtual image I through the front windshield 910. Namely, when viewed from the viewer V, the virtual image I is enlargedly displayed through the front windshield 910.

Typically, the front windshield 910 is not flat, but is slightly curved. Therefore, an image forming position of the virtual image I is determined by both the concave mirror 105 and the curved surface of the front windshield 910. The converging power of the concave mirror 105 is preferably set such that the virtual image I is formed at a position (a depth position) greater than or equal to 4 m to less than or equal to 10 m (preferably less than or equal to 6 m) away from the viewpoint position E of the viewer V.

Further, at least one of the mirror 103 and the concave mirror 105 is preferably designed and arranged so as to correct optical distortion caused by the shape of the front windshield 910. Such optical distortion causes a horizontal line of an intermediate image to become upwardly or downwardly convex due to the slightly curved front windshield 910.

Further, a combiner may be provided as a transmissive reflection member on the viewpoint position E side relative to the front windshield 910. Similarly to a case in which the front windshield 910 is irradiated with light from the concave mirror 105, a virtual image I may be displayed by irradiating the combiner with light from the concave mirror 105.

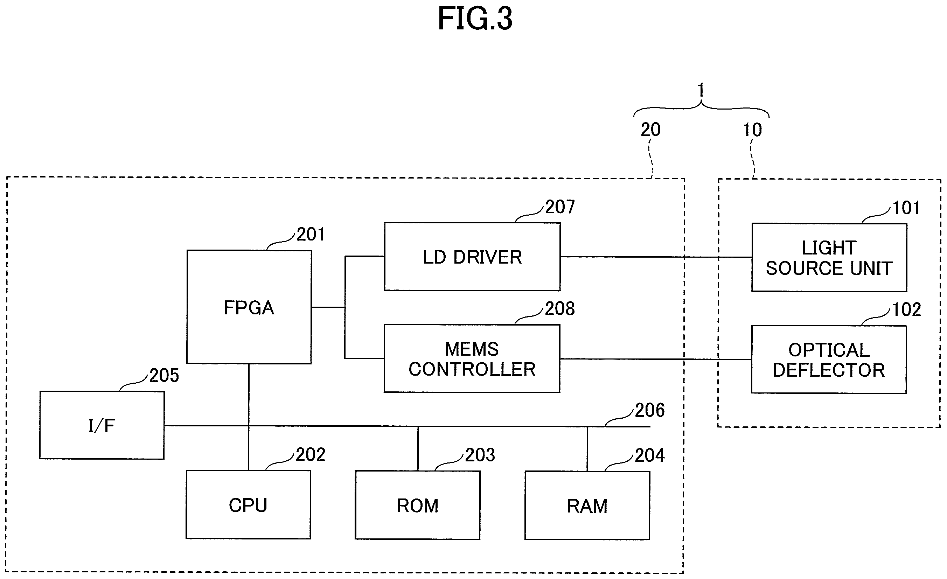

FIG. 3 is a block diagram illustrating a hardware configuration of the information display apparatus according to the first embodiment. Referring to FIG. 3, the electronic unit 20 includes a field-programmable gate array (FPGA) 201, a central processing unit (CPU) 202, read-only memory (ROM) 203, random access memory (RAM) 204, an interface (I/F) 205, a bus-line 206, a laser diode (LD) driver 207, and a micro-electro-mechanical systems (MEMS) controller 208. The FPGA 201, the CPU 202, the ROM 203, the RAM 204, and the I/F 205 are coupled to each other via the bus-line 206.

The FPGA 201 drives the LDs of the light source unit 101 of the optical unit 10 by means of the LD driver 207. Furthermore, the FPGA 201 drives the optical deflector 102 of the optical unit 10 by means of the MEMS controller 208.

The CPU 202 controls functions of the information display apparatus 1. The ROM 203 stores programs executed by the CPU 202 to control the functions of the information display apparatus 1. The RAM 204 is used as a work area of the CPU 202. The I/F 205 is an interface for communicating with an external controller and the like. For example, the I/F 205 is coupled to a Controller Area Network (CAN) of the vehicle.

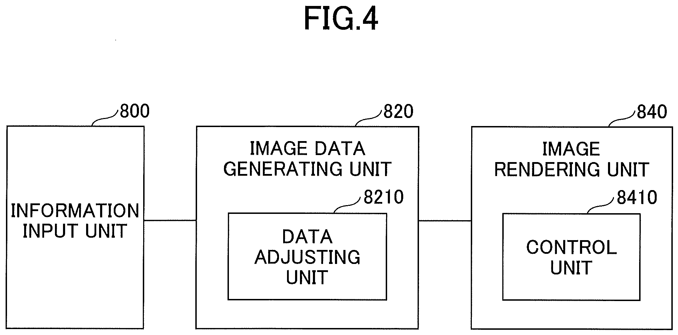

FIG. 4 is a block diagram illustrating functions of the information display apparatus according to the first embodiment. Referring to FIG. 4, the information display apparatus 1 includes an information input unit 800, an image data generating unit 820, and an image rendering unit 840.

Information from the information acquisition unit 5 is received by (input into) the information input unit 800. The information input unit 800 may receive information in a wired or wireless manner. For example, information relating to a vehicle (information such as a speed and a travel distance) from the CAN or external information (information such as navigation information or traffic information from the global positioning system (GPS)) may be input in the information input unit 800. Information input in the information input unit 800 may include at least one of a position, a size, a shape, a color, and brightness of a real object such as a preceding vehicle.

The image data generating unit 820 generates image data representing an image to be rendered, based on information input in the information input unit 800. The image data generating unit 820 includes a data adjusting unit 8210. When the image data is generated, the data adjusting unit 8210 may adjust at least one of a position, a size, a shape, a color, and brightness (luminance) of a virtual image to be displayed.

The image rendering unit 840 includes a control unit 8410. The control unit 8410 controls the optical unit 10 in accordance with the image data, thereby irradiating the front windshield 910 with light. As a result, a virtual image I can be made visible from the viewpoint position E of the viewer V.

### [Three-Dimensional Display]

Typically, people perceive the depth of space based on two-dimensional visual performance in a visual field (i.e., pictorial cues), a difference in visual performance between eyes and focus adjustment of eyes (i.e., oculomotor cues), and a change in visual performance of an object when a viewpoint moves (i.e., motion parallax). Among them, by mainly using the pictorial cues, the information display apparatus 1 can display information as a virtual image such that the virtual image can be perceived as existing at a position in real space.

When an object exists in real space, as the distance between the object and a viewer becomes nearer, the appearance size of the object viewed from the viewer becomes greater. Further, as the distance between the object and the viewer becomes nearer, the object is viewed at a lower portion of the visual field of the viewer. Further, for a far distant object, the object may be viewed faintly from the viewer due to the density of air.

In the information display apparatus 1, an image projected onto the front windshield 910 is superimposed on a front scene and perceived as a virtual image from the viewer. Therefore, by adjusting a geometric shape of display information of the virtual image (geometric conversion) so as to match the real space, the display information can be three-dimensionally displayed. Namely, by using the above-described depth perception of a human, the information display apparatus 1 allows the display information to be perceived (as an illusion) as existing in three dimensions at a position in the real space when viewed from the viewer.

In this way, it is possible to enhance visibility of display information by displaying the display information that three-dimensionally matches a real object existing around a reference vehicle when viewed from the viewer. Further, an image perceived as a virtual image that three-dimensionally matches a real object existing around the reference vehicle when viewed from the viewer, and an image perceived as a virtual image that does not three-dimensionally match a real object existing around the reference vehicle when viewed from the viewer may also be simultaneously displayed in a display region of the front windshield 910.

A display image (a virtual image) of the information display apparatus 1 is projected onto a two-dimensional position that is determined at the design phase. Therefore, even if a shape and a color of the display image is adjusted such that the display image is viewed as existing at a position in real space (for example, on a road surface in front of the viewpoint of the viewer), a difference of view according to the position where the virtual image is displayed, such as parallax, appears in the retinas of the left and right eyes of the viewer.

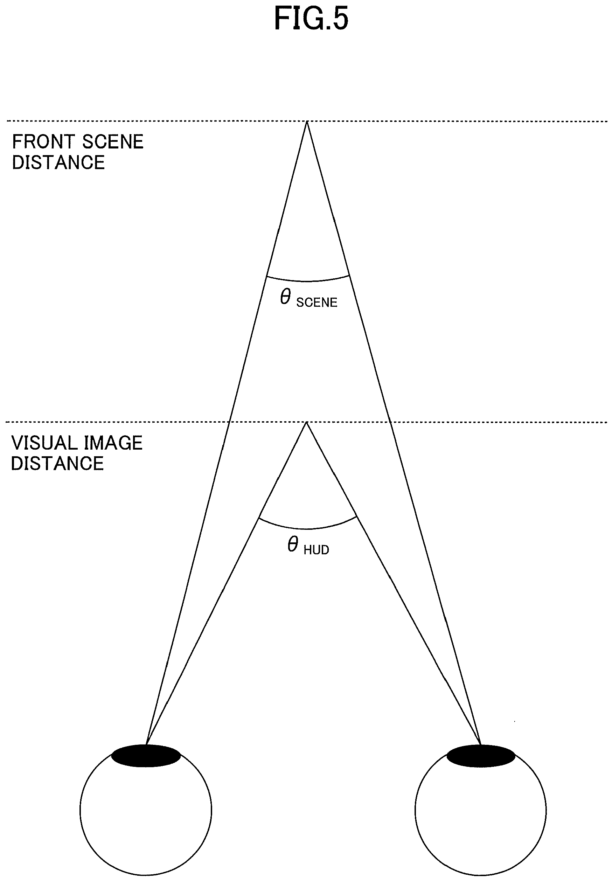

As illustrated in FIG. 5, θ_{SCENE} denotes an angle (convergence angle) formed by lines of sight of a viewer's both eyes, which represents parallax when the viewer views a far point in a front scene. θ_{HUD} denotes an angle formed by lines of sight of the viewer's both eyes, which represents parallax when the viewer views a virtual image displayed by the information display apparatus 1. In this case, |θ_{HUD} -θ_{SCENE}| is defined as a parallax angle. In general, the convergence angle refers to an angle formed by lines of sight of a viewer's both eyes when the viewer views a target object.

When the "parallax angle" exceeds 1 degree, the viewer may perceive a double image, giving the viewer a feeling of fatigue and discomfort. Therefore, the information display apparatus 1 is preferably designed to set the "parallax angle" to less than or equal to 1 degree. For example, in the information display apparatus 1, when the distance L (FIG. 2) is set to be in a range from 4 m to 6 m with the parallax angle being set to less than or equal to 1 degree, the viewer can perceive a virtual image without feeling much discomfort while viewing an object existing in a front scene even if the object exists at a distance of 1000 m ahead.

### [Postcard]

A virtual image is projected in a planar manner when viewed from the viewer. Thus, in the entire display region capable of displaying a virtual image, a region other than the virtual image (a region where no virtual image is expected to be displayed) appears slightly bright, which is called black floating. Herein, black floating is referred to as a "postcard".

The inventors have found that when a viewer identifies a postcard, the viewer feels that display information is displayed at a closer position than a position where the display information is expected to be displayed. Namely, it has been found that when a viewer identifies a postcard, an illusion effect decreases, making it difficult for the viewer to perceive display information as existing at an expected position. In the following, a verification experiment will be explained.

### [Verification Experiment on Distances at which Information is perceived with and without Postcard]

The information display apparatus 1 is placed in an experimental environment having a sufficiently large space in a direction in which a virtual image is projected. In this experimental environment, display information (a virtual image) is visually identified by a viewer. A distance L between the viewpoint position E of the viewer V and an image forming position of the virtual image I is as described above. Under the above-described conditions, a shape and a size of the display information is adjusted so as to be perceived as existing on the ground at a distance of 14 m ahead when viewed from the viewer V.

Under such conditions, a perception experiment was performed by using a magnitude estimation method. In the experiment, a subject was asked about distances at which display information was perceived as being displayed in respective cases where a postcard is displayed and is not displayed.

As a result, it was found that when a postcard exists, the viewer did not perceive the information (the virtual image) existing at the distance of 14 m ahead, but perceived the information as existing at the image forming position of the virtual image I. Accordingly, it became clear that when a postcard exists, a virtual image fails to be perceived as existing at an expected position in real space.

In light of the above-described verification experiment, with the distance L in FIG. 2 being 5 meters, in a case where display information is adjusted to be perceived as existing at a distance of several tens of meters ahead, the viewer can perceive the display information as being displayed at a distance of several tens of meters ahead when a postcard is not identified. Conversely, when a postcard is identified, the viewer perceives the display information as being displayed at a position where the postcard is displayed (in this case, at the distance L of 5 meters ahead).

When the panel method is employed, a panel is required to be entirely illuminated. Therefore, because of the nature of the panel such as a liquid crystal panel and a DMD panel, it is difficult to completely bring the panel in a non-display state even with an image signal for the non-display state being sent, which may cause black floating to be seen. Further, in a vacuum fluorescent display (VFD), a phosphor is used to emit light in a vacuum tube. Due to diffusion of electrons and a phosphor emitting light, in principal, it is difficult to eliminate black floating from the non-light emitting region.
Namely, in the panel method, it is difficult to completely make a postcard invisible to a viewer.

Conversely, when the laser scanning method is employed, the information display apparatus 1 controls light emission from the LDs of the light source unit 101 in accordance with the scanning position of laser beam, while two-dimensionally scanning (raster-scanning) the laser beam onto an image-rendering region of a scan surface of the screen 104. Accordingly, per-pixel rendering can be performed and a virtual image can be displayed.

In an instant, only a dot image equivalent to a beam diameter is projected from the information display apparatus 1. However, as scanning is performed at very high speed, an afterimage remains in human eyes in a single frame image. By making use of this afterimage phenomenon, the viewer V can perceive an image as being projected onto the display region.

Specifically, an image formed on the screen 104 is reflected by the concave mirror 105 and the front windshield 910, so that the viewer V perceives the image as a virtual image in the display region. With this mechanism, in order not to display a virtual image, light emission from the LDs may be stopped. Namely, in the display region, the luminance of a region other than a region displaying a virtual image may be set to substantially zero.

In this way, in the laser scanning method, it is possible to turn off the LDs or decrease luminance (intensity of light) in the region other than the region displaying a virtual image. Therefore, as compared to the panel method, the laser scanning method easily allows a postcard to be completely invisible to the viewer. However, there is still a case where a viewer may identify a postcard. In the laser scanning method, conditions under which a viewer becomes unable to visually identify a postcard are investigated.

### [Conditions under which a postcard is identified]

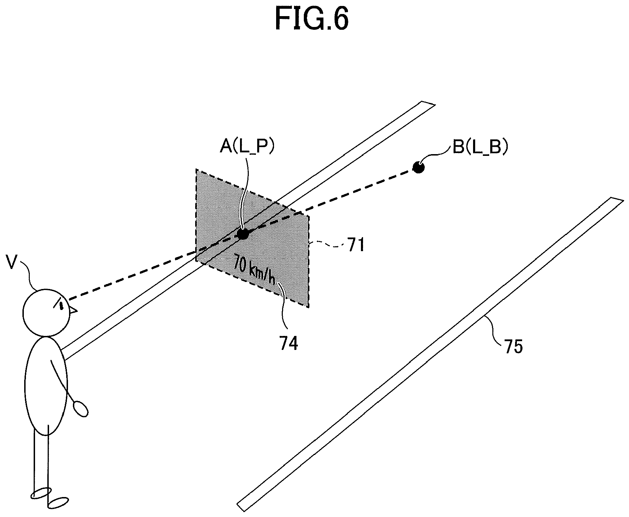

FIG. 6 is a diagram for explaining luminance L_P and background luminance L_B. In FIG. 6, 71 denotes a display region capable of displaying a virtual image, 74 denotes a non-superimposed virtual image, and 75 denotes a white line on the road.

As illustrated in FIG. 6, L_P represents luminance of a predetermined position A in a non-rendering region of a display region 71 when viewed from a viewer V. Background luminance L_B represents luminance of a background B that is behind the predetermined position A when viewed from the viewer V. The luminance L_P of the predetermined position A can be varied by varying luminance of an image rendered on the screen 104.

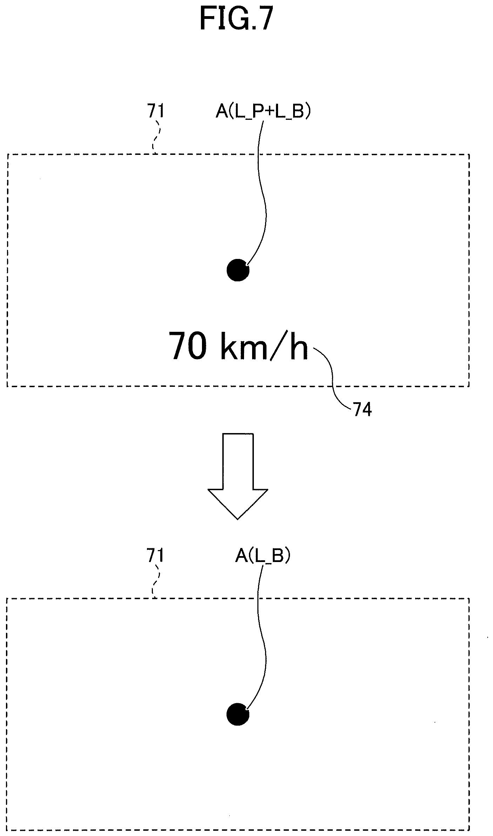

The luminance L P of the predetermined position A and the background luminance L_B can be obtained by means of a method illustrated in FIG. 7. First, a viewpoint position (a middle point between the right and left eyes) of the viewer V is set as a reference position, and a two-dimensional luminance meter is disposed at the reference position. As illustrated in an upper part (above an arrow) of FIG. 7, luminance of the predetermined position A when the non-superimposed virtual image 74 (70 km/h) is displayed is measured by the two-dimensional luminance meter. At this time, the luminance L_P of the predetermined position A in the non-rendering region + the background luminance L_B is measured.

Next, as illustrated in a lower part (below the arrow) of FIG. 7, luminance of the predetermined position A when the non-superimposed virtual image 74 (70 km/h) is not displayed is measured by the two-dimensional luminance meter. At this time, only the background luminance L_B is measured. By performing the above two measurements, both the luminance L_P of the predetermined position A and the background luminance L_B can be obtained.

By sequentially moving the predetermined position A in the non-rendering region of the display region 71 and repeating the above-described two measurements, the luminance L_P and the background luminance L_B at each position in the non-rendering region can be obtained.

In light of the above, luminance at which a postcard is visually identified is examined. To be more specific, by varying luminance of an image rendered on the screen 104, the luminance L_P of the predetermined position A is varied. In this way, as illustrated in FIG. 7, a luminance value at which a postcard starts to be visually identified is measured by using the two-dimensional luminance meter.

In the measurements, a contrast between the predetermined position A and the background luminance L_B is defined as L_B/ L_P. The background luminance L_B is measured under three conditions that can be established in the experimental environment. The three respective conditions for measuring the background luminance L_B measured are assumed to be luminance of a road surface in the nighttime, luminance of a road surface under a light in a tunnel, and luminance of a road surface in cloudy daytime, in the order from smallest.

By varying the luminance L_P of the predetermined position A for each of the three background luminance L_B, the contrast L_B/L_P at which a postcard becomes unable to be identified is calculated. Note that the luminance L_P of the predetermined position A and the background luminance L_B are measured by using the method described with reference to FIG. 7. Table 1 indicates results.

**[Table 1]**

| L_P OF NON-RENDERING REGION [cd/m²] | BACKGROUND LUMINANCE L_B [cd/m²] | CONTRAST L_B/L_P |
|---|---|---|
| 0.1 | 1.5 | 15 |
| 0.5 | 46.2 | 92 |
| 2.8 | 213.0 | 76 |

As illustrated in Table 1, the luminance L_P at which the postcard becomes able to be visually identified differs depending on the background luminance L_B. For example, it is found that, at the background luminance L_B of the road surface in the nighttime, the postcard becomes unable to be visually identified with the contrast L_B/L_P of 15 or more. Further, as seen from the results, when the L_B is 46.2 [cd/cm²] and when the L_B is 213 [cd/cm²], values of the contrast L_B/L_P are close to each other.

Typically, a luminance-difference threshold (a threshold at which a difference in luminance becomes able to be identified by a human), although varying depending on brightness of an environment, is thought to be threshold luminance/background luminance = approximately 1/100 to 1/1,000.

According to the results in Table 1, it is conceived that, when the background luminance L_B indicates greater than or equal to a certain degree of brightness (46.2 [cd/cm²], in this experiment), the contrast at which a postcard is able to be visually identified becomes stable. Considering the results of Table 1 and the luminance difference threshold, a postcard becomes unable to be visually identified when the contrast L_B/L_P becomes greater than or equal to 100, regardless of the background luminance L B.

As described, it is found that, regardless of the luminance L P and the background luminance L_B, a postcard is unable to be identified when the contrast L_B/L_P is greater than or equal to 100, in general. Namely, in the information display apparatus 1, it is found that a value of the luminance L_P at which a postcard is unable to be substantially identified (i.e., a postcard is not substantial) can be set. However, as is seen from Table 1, the contrast L_B/L_P is not necessarily set to greater than or equal to 100, depending on the condition.

In the information display apparatus 1, as luminance of a virtual image displayed becomes high, the luminance L_P becomes high. Also, as luminance of the virtual image displayed becomes low, the luminance L_P becomes low. Therefore, a data adjusting unit 8210 of the information display apparatus 1 can achieve a state in which a postcard is not unidentified at all times by adjusting luminance of a virtual image to be displayed such that the contrast L_B/L_P is greater than or equal to a predetermined value. Further, in addition to data adjustment, the information display apparatus 1 may be optically designed such that the predetermined value is met during use.

In the panel method, it is difficult to set the contrast L_B/ L_P to greater than or equal to 100. However, in the laser scanning method, it is easy to set the contrast L_B/L_P to even approximately 1,000 to 10,000. Accordingly, it is preferable to employ the laser scanning method so as to achieve a state in which a postcard is not unidentified.

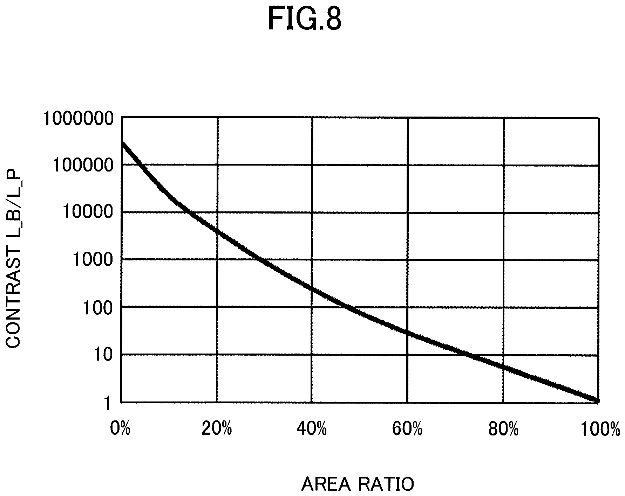

Further, even with the laser scanning method, when luminance of a displayed virtual image is high, luminance of a postcard portion may also become high depending on the size of the virtual image. A measurement experiment on a size of a displayed virtual image and luminance of a postcard portion is performed. To be more specific, with the background luminance L_B of 10,000 [cd/m²], a displayed virtual image is illuminated so as to be sufficiently visible. In this state, by varying the size of the virtual image (an area of an illuminated portion), the luminance L P of a postcard portion is measured. As illustrated in FIG. 8, results of the measurement indicate that the contrast L_B/ L_P becomes greater than or equal to 100 when a ratio (area ratio) of the area of the illuminated portion to an area of the entire display region becomes less than 45%.

Namely, when displaying virtual images, it is preferable to set the ratio of the total area of the virtual images simultaneously displayed to the area of the entire display region to become less than or equal to a predetermined area ratio (less than or equal to approximately 45%, for example). In this way, even when an upper limit of luminance of a virtual image is set somewhat high, the contrast L_B/ L_P of greater than or equal to 100 can be obtained.

Further, in the information display apparatus 1, it is preferable to avoid obstructing the viewer's visual field as the viewer is mostly a driver. In light of this, instead of illuminating the entire display region, it is preferable to set the ratio of the total area of virtual images simultaneously displayed (simultaneously illuminated) to the area of the entire display region to become less than or equal to the predetermined area ratio.

### [Comparative Example and Example]

In the following, by giving a comparative example and an example, a three-dimensional display and a postcard will be described again with reference to the drawings.

### <Comparative Example>

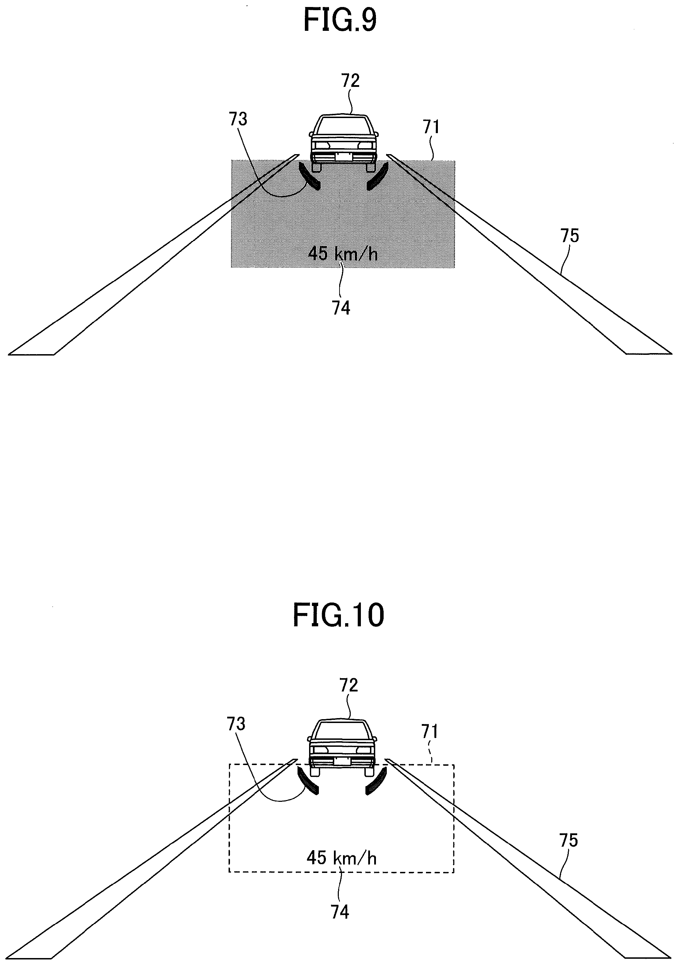

FIG. 9 is a schematic diagram (a comparative example) illustrating a state in which a preceding vehicle is marked by using a HUD that employs the panel method. In the HUD employing the panel method, a virtual image can be rendered in any position in the display region 71 capable of displaying the virtual image. In FIG. 9, a superimposed virtual image 73 (a figure having a predetermined shape) is displayed under a preceding vehicle 72 by adjusting the geometric shape of the superimposed virtual image 73 such that the superimposed virtual image 73 can be perceived as following the preceding vehicle 72. At the same time, a non-superimposed virtual image 74 (45 km/h) is two-dimensionally displayed without being superimposed on the background. In FIG. 9, 75 denotes a white line on the road.

In the HUD employing the panel method, light from a light source unit is not completely blocked. Therefore, in the display region 71, a region (a non-rendering region) other than regions displaying the superimposed virtual image 73 and the non-superimposed virtual image 74 appears slightly bright, causing a postcard to be identified. In FIG. 9, the non-rendering region (the postcard region) is colored in grey.

Once the postcard is identified, the viewer visually identifies the display region 71 of the HUD. By adjusting the geometric dimensions, the superimposed virtual image 73 is expected to be perceived as existing at the same position as that of the preceding vehicle 72 located at a farther distance from the projection position of the virtual image. However, once the viewer visually identifies the display region 71 of the HUD due to the postcard, the viewer recognizes that the superimposed virtual image 73 and the non-superimposed virtual image 74 exist on the same plane, making it difficult to have an illusion of the superimposed virtual image.

### <Example>

FIG. 10 is a schematic diagram (an example) illustrating a state in which the preceding vehicle is marked by using a HUD that employs the laser scanning method. Similarly to the HUD employing the panel method, in the HUD employing the laser scanning method, the superimposed virtual image 73 (the figure having the predetermined shape) and the non-superimposed virtual image 74 (45 km/h) are displayed. However, the laser scanning method allows no postcard to be identified in the display region 71. A rectangle indicated by a dash line is displayed in the display region 71 for convenience purposes only, and the rectangle does not actually exist (the rectangle is not actually visually identified).

When no postcard is identified, the viewer can separately perceive the superimposed virtual image 73 and the non-superimposed virtual image. As in FIG. 9, the superimposed virtual image 73 is displayed by geometrically adjusting the dimensions, such that the superimposed virtual image can be perceived as following the preceding vehicle. Further, when no postcard is identified, the superimposed virtual image 73 and the non-superimposed virtual image 74 are visually identified in respective spaces without being connected to each other. Therefore, the viewer perceives the superimposed virtual image 73 as existing at a position similar to that of the preceding vehicle 72 on which the virtual image 73 is expected to be superimposed.

As described, a postcard is perceived when the contrast L_B/L_P becomes less than the predetermined value (approximately 100). In order to set the contrast L_B/L_P to greater than or equal to the predetermined value, the information input unit 800 of the information display apparatus 1 may receive information related to the background luminance L_B from the information acquisition unit 5, and may adjust luminance of the superimposed virtual image 73 and of the non-superimposed virtual image 74.

In the above-described example, the superimposed virtual image 73 and the non-superimposed virtual image 74 are displayed in the display region 71. However, even in a case where the superimposed virtual image 73 is not displayed and only the non-superimposed virtual image 74 is displayed, it is possible to exhibit an effect of not impairing the viewer's visibility by allowing no postcard to be identified.

Based on information received by the information input unit 800 from the information acquisition unit 5, the data adjusting unit 8210 can adjust luminance of display information (such as the superimposed virtual image 73 and the non-superimposed virtual image 74) in accordance with brightness of the environment. For example, the data adjusting unit 8210 can adjust luminance of display information to become darker in the nighttime so as to avoid giving the viewer a feeling of discomfort such as dazzle.

In general, nighttime luminance of the road surface as a background of a virtual image is approximately 1 to 10 [cd/m²]. In this state, when luminance of the non-rendering region becomes greater than or equal to 0.01 to 0.1 [cd/m²], a postcard is identified. As is clear from the perception experiment, when luminance of the road surface is 1 [cd/m²], it is appropriate to set luminance of display information to approximately 10 [cd/m²].

Accordingly, a relationship of luminance L_H of a virtual image having the highest luminance, among virtual images displayed in the display region 71, and luminance L P of the non-rendering region preferably satisfies L_H : L_P = 1000 : 1, such that display information having appropriate brightness is displayed with no postcard identified.

Further, the information display apparatus 1 may set luminance of display information higher than usual depending on the situation, so as to attract the viewer's attention. Therefore, in order to control the brightness of display information at a level allowing the display information to be displayed with no postcard identified and the viewer's attention to be attracted, it is preferable to satisfy L_H > 1000 × L_P.

### [Reception of Object Information]

The information display apparatus 1 determines an image to be displayed based on a viewpoint position of a viewer, a position of a virtual image, a distance between the viewpoint and the virtual image, a size of the virtual image, and a range in which to superimpose the virtual image. For example, when the virtual image is superimposed on a road surface, a position and a distance at which to superimpose the virtual image are determined, and the virtual image is geometrically converted such that the virtual image can be viewed as existing at the target position and the distance when viewed from the viewpoint of the viewer.

When the virtual image is assumed to be displayed on a flat road surface, the virtual image can be displayed by performing the geometric conversion only. Conversely, when the virtual image is displayed on a non-flat road surface such as a curved road surface and a sloped road surface, or when the virtual image is displayed between white lines on a road surface, object information is required to be obtained. The object information includes, for example, coordinates of a position (position information) on a road surface on which to superimpose a virtual image. Further, when a virtual image is superimposed on an object such as a preceding vehicle and a pedestrian, the object information refers to position information of the object. Further, the object information may be information related to other objects.

For example, by using laser radar as the information acquisition unit 5, position information can be obtained as object information. The laser radar is a device configured to emit a laser beam and receive reflected light (scattered light) from an object (for example, a preceding vehicle, a stopped vehicle, a building, and a pedestrian), such that position information (a distance to the object and coordinates of the object) can be measured.

A stereo camera may be used as the information acquisition unit 5. The stereo camera includes a camera unit for the left eye and a camera unit for the right eye, and may calculate three-dimensional position information of an object based on a parallax image obtained from the camera units.

The information display apparatus 1 causes the information input unit 800 to receive object information (for example, three-dimensional position information of an object) from the information acquisition unit 5, and sends the received object information to the image data generating unit 820. The image data generating unit 820 adjusts parameters (at least one of an image forming position, a size, a shape, a color, and brightness of a virtual image) of display information (the virtual image) based on the object information. When the display information that three-dimensionally matches a real object is displayed, the parameters of the virtual image are preferably adjusted such that a sense of perspective can be set in line with a position, a shape, and a size of the real object.

Further, the information display apparatus 1 may cause the information input unit 800 to receive traffic information (such as traffic congestion information and traffic rules) and weather information, and may display the received information as a virtual image in such a manner that three-dimensionally matches a real object.

Further, the information display apparatus may cause the information input unit 800 to receive position information of a reference vehicle, for example, and may display the received information as a virtual image in such a manner that three-dimensionally matches a real object. The position information of the reference vehicle may be received from a device equipped with the GPS (for example, a car navigation system).

Although the embodiments have been specifically described above, the present invention is not limited to the above-described embodiments. Various modifications and variations may be made without departing from the scope of the present invention.

The present application is based on Japanese priority application No. 2016-024051 filed on February 10, 2016, with the Japanese Patent Office, the entire contents of which are hereby incorporated by reference.

### [Description of the Reference Numeral]

1 information display apparatus
10 optical unit
20 electronic unit
71 display region
72 preceding vehicle
73 superimposed virtual image
74 non-superimposed virtual image
101 light source unit
102 optical deflector
103 mirror
104 screen
105 concave mirror
201 FPGA
202 CPU
203 ROM
204 RAM
205 I/F
206 bus-line
207 LD driver
208 MEMS controller
800 information input unit
820 image data generating unit
840 image rendering unit
8210 data adjusting unit
8410 control unit

### [Related-Art Documents]

### [Patent Document]

[Patent Document 1] Japanese Unexamined Patent Application Publication No. 2006 - 17626

## Claims

1. An information display apparatus for projection of one or more images onto a transmissive reflection member,
wherein the information display apparatus is configured to adjust luminance of the one or more images to be displayed, such that, in a display region capable of displaying the one or more images, L_B/L_P that is a value obtained by luminance L_P of a region other than the one or more images to be displayed and background luminance L_B behind the region other than the one or more images becomes greater than or equal to a predetermined value.

2. The information display apparatus according to claim 1, wherein the predetermined value is 100.

3. The information display apparatus according to claim 1 or 2, wherein a ratio of a total area of the one or more images to be simultaneously displayed to an area of the entire display region is less than or equal to a predetermined area ratio.

4. The information display apparatus according to claim 3, wherein the predetermined area ratio is 45%.

5. The information display apparatus according to any one of claims 1 to 4, wherein, among the one or more images to be displayed, luminance L_H of an image having highest luminance satisfies L_H > 1000 × L_P.

6. The information display apparatus according to any one of claims 1 to 5, wherein the one or more images are made visible to a viewer who is an occupant of a moving object.

7. The information display apparatus according to claim 6, wherein the one or more images that are displayed in the display region each three-dimensionally match a real object existing around the moving object when viewed from the viewer.

8. The information display apparatus according to claim 7, wherein the one or more images that each three-dimensionally match the real object existing around the moving object when viewed from the viewer, and one or more images that do not three-dimensionally match the real object when viewed from the viewer are simultaneously displayed in the display region.

9. The information display apparatus according to claim 7 or 8, comprising an information input unit configured to receive object information that is information related to the real object existing around the moving object.

10. The information display apparatus according to claim 9, wherein at least one of a position, a size, a shape, a color, and brightness of each of the one or more images is adjusted based on the object information.

11. The information display apparatus according to claim 9 or 10, wherein the object information includes at least one of a position, a size, a shape, a color, and brightness of the real object.

12. The information display apparatus according to any one of claims 9 to 11, wherein the information input unit is configured to further receive traffic information related to the moving object, and
the traffic information is displayed as one of the one or more images in the display region based on the object information so as to three-dimensionally match the real object when viewed from the viewer.

13. The information display apparatus according to any one of claims 9 to 12, wherein the information input unit is further configured to receive position information of the moving object, and
the one or more images are each displayed in the display region based on the position information so as to three-dimensionally match the real object when viewed from the viewer.

14. The information display apparatus according to any one of claims 1 to 13, wherein the one or more images are formed by a laser scanning method.

15. The information display apparatus according to claim 14, comprising:
a laser beam source;
an optical deflector configured to deflect a laser beam emitted from the laser beam source; and
an optical system configured to direct the laser beam deflected by the optical deflector toward the transmissive reflection member.

## Amended claims

### Amended claims under Art. 19.1 PCT

1. (Amended) An information display apparatus for projection of one or more images onto a transmissive reflection member,
wherein the information display apparatus is configured to adjust brightness of the one or more images to be displayed, such that, in a display region capable of displaying the one or more images, L_B/L_P that is a value obtained by brightness L_P of a region other than the one or more images to be displayed and background brightness L_B behind the region other than the one or more images becomes greater than or equal to a predetermined value.

2. The information display apparatus according to claim 1, wherein the predetermined value is 100.

3. The information display apparatus according to claim 1 or 2, wherein a ratio of a total area of the one or more images to be simultaneously displayed to an area of the entire display region is less than or equal to a predetermined area ratio.

4. The information display apparatus according to claim 3, wherein the predetermined area ratio is 45%.

5. (Amended) The information display apparatus according to any one of claims 1 to 4, wherein, among the one or more images to be displayed, brightness L_H of an image having highest brightness satisfies L_H > 1000 × L_P.

6. The information display apparatus according to any one of claims 1 to 5, wherein the one or more images are made visible to a viewer who is an occupant of a moving object.

7. The information display apparatus according to claim 6, wherein the one or more images that are displayed in the display region each three-dimensionally match a real object existing around the moving object when viewed from the viewer.

8. The information display apparatus according to claim 7, wherein the one or more images that each three-dimensionally match the real object existing around the moving object when viewed from the viewer, and one or more images that do not three-dimensionally match the real object when viewed from the viewer are simultaneously displayed in the display region.

9. The information display apparatus according to claim 7 or 8, comprising an information input unit configured to receive object information that is information related to the real object existing around the moving object.

10. The information display apparatus according to claim 9, wherein at least one of a position, a size, a shape, a color, and brightness of each of the one or more images is adjusted based on the object information.

11. The information display apparatus according to claim 9 or 10, wherein the object information includes at least one of a position, a size, a shape, a color, and brightness of the real object.

12. The information display apparatus according to any one of claims 9 to 11, wherein the information input unit is configured to further receive traffic information related to the moving object, and
the traffic information is displayed as one of the one or more images in the display region based on the object information so as to three-dimensionally match the real object when viewed from the viewer.

13. The information display apparatus according to any one of claims 9 to 12, wherein the information input unit is further configured to receive position information of the moving object, and
the one or more images are each displayed in the display region based on the position information so as to three-dimensionally match the real object when viewed from the viewer.

14. The information display apparatus according to any one of claims 1 to 13, wherein the one or more images are formed by a laser scanning method.

15. The information display apparatus according to claim 14, comprising:
a laser beam source;
an optical deflector configured to deflect a laser beam emitted from the laser beam source; and
an optical system configured to direct the laser beam deflected by the optical deflector toward the transmissive reflection member.
